# EUROPEAN PATENT APPLICATION

(11) **EP 4 624 236 A2**
(43) Date of publication of application: **01.10.2025**
(21) Application number: 25165925.6
(22) Date of filing: 25.03.2025
(51) Int. Cl.: B60L 53/66, B60L 53/65

(54) **DISTRIBUTED CHARGING SESSION DATA TRANSFER AND CERTIFICATE-BASED AUTHENTICATION FOR CHARGING SESSIONS OF AN ELECTRIC VEHICLE**

(30) Priority: 26.03.2024 US 202418617376
(71) Applicant: Siemens Industry, Inc., Alpharetta, Georgia 30005-4437 (US)
(72) Inventor: Terricciano, Paul, Roswell, 30076 (US); Feldman, Daniel, New York, 10022 (US); Biehl, Marlene, Atlanta, 30005 (US)
(74) Representative: Isarpatent

(57) **Abstract**

Method for distributed charging session data transfer between a charging station (210) and a charging station operator (202), based on a determination that an internet connection of the charging station is not available, the method comprising: recording, by the charging station, charging session data in a charging session data log (702); obtaining, by the charging station from a user device, a committed charging station data set (706); updating the charging session data log based on the committed charging station data set (708); and transmitting the updated charging session data log to the user device (710).

## Description

### BACKGROUND

Aspects of the present invention generally relate to operating a charging station for electric vehicles (EV) and, more specifically, to methods for distributed charging session data transfer and certificate-based authentication for charging an EV.

Unlike gas-powered vehicles, EVs do not require internal combustion engines to operate. Sales of EVs are expected to expand rapidly across the world in the coming years. A number of market forecasts indicate electric vehicles will account for nearly 1 in 5 of all vehicles sold within the next 10 years. It is estimated approximately 3 million EVs will be sold in the US in 2028. A rule of thumb by industry analysts is that there need to be about 20 public EVC stations per EV on the road to support the ecosystem. There were just over 60,000 charging stations in the US at the end of 2019. Thus, tens of thousands will need to be deployed every year for some time as the market grows.

A charging station, also known as a charge point or electric vehicle supply equipment (EVSE), is a piece of equipment that supplies electrical power for charging plug-in electric vehicles (including electric cars, electric trucks, electric buses, neighborhood electric vehicles, and plug-in hybrids). Charging stations have provided hundreds of millions of charges to EV drivers worldwide. Typically, when an EV is connected to AC power, 120V or 240V, and a battery charger in the EV converts the AC power to the DC needed to charge the battery and controls the charging process. There are three categories or types of charging: Trickle Charge, AC Charge, and DC Charge. Many drivers of electric vehicles (EVs)-which include all-electric vehicles and plug-in hybrid electric vehicles (PHEVs)-charge their vehicles overnight at home using AC Level 1 or AC Level 2 charging equipment.

In order to use a charging station, a user must connect an EV to the charging station and the charging station must authenticate the user to charge the user for the charging session. In most cases, the charging station is connected to a charging station operator via an Internet connection, and the authentication of the user is performed online via the charging station operator. As a result, in situations when the Internet connection of the charging station is down, the charging station cannot authenticate users and therefore cannot enable, or properly charge for, charging sessions.

### SUMMARY

Embodiments include a method for distributed charging session data transfer between a charging station and a charging station operator. The method includes recording, by the charging station, charging session data in a charging session data log and obtaining, by the charging station from a user device, a committed charging station data set. The method also includes updating the charging session data log based on the committed charging station data set and transmitting the updated charging session data log to the user device.

Embodiments also include a method for performing certificate-based authentication for a charging session of an electric vehicle. The method includes broadcasting, by a charging station via a wireless personal area network protocol, a charging station availability message, establishing a connection between a user device and the charging station via the wireless personal area network protocol, and receiving, by the charging station from the user device via the connection, a user certificate stored on the user device. The method also includes validating, by the charging station based at least in part on a public key of the user certificate, the user certificate and enabling the charging session based on a determination by the charging station that the user certificate is valid. The method further includes recording, by the charging station, charging session data and transmitting the charging session data to the user device based on a determination that an internet connection of the charging station is not available.

Embodiments also include a method for performing certificate-based authentication for a charging session of an electric vehicle. The method includes monitoring an internet connection of a charging station. Based on a determination that the internet connection of the charging station is not available, the method incudes broadcasting, by the charging station via a wireless personal area network protocol, a charging station availability message, establishing a connection between a user device and the charging station via the wireless personal area network protocol, receiving, by the charging station from the user device via the connection, a user certificate stored on the user device, and validating, by the charging station based at least in part on a public key of the user certificate, the user certificate. Based on a determination by the charging station that the user certificate is valid, the method includes enabling the charging session and recording, by the charging station, charging session data. The method further includes transmitting a copy of the charging session data to the user device and based on a determination that the internet connection of the charging station has been reestablished, transmitting the charging session data to a charging station operator.

Additional technical features and benefits are realized through the techniques of the present disclosure. Embodiments and aspects of the disclosure are described in detail herein and are considered a part of the claimed subject matter. For a better understanding, refer to the detailed description and to the drawings.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects.
FIG. 1 illustrates a block diagram of a computing system in accordance with one or more embodiments of the present invention.
FIG. 2A illustrates a block diagram of a system for certificate-based authentication for a charging session of an electric vehicle in accordance with an embodiment of the present invention.
FIG. 2B illustrates a block diagram of a charging session data log in accordance with an embodiment of the present invention.
FIG. 2C illustrates a block diagram of a committed charging station data set in accordance with an embodiment of the present invention.
FIG. 3 illustrates a flow chart diagram of a method for certificate-based authentication for a charging session of an electric vehicle in accordance with an embodiment of the present invention.
FIG. 4 illustrates a block diagram of the communication between a charging station, a user device, and a charging station operator during certificate-based authentication for a charging session of an electric vehicle in accordance with an embodiment of the present invention.
FIG. 5 illustrates a flow chart diagram of a method for certificate-based authentication for a charging session of an electric vehicle in accordance with an embodiment of the present invention.
FIG. 6 illustrates a flow chart diagram of a method for providing a committed charging station data set to a user device in accordance with an embodiment of the present invention.
FIG. 7 illustrates a flow chart diagram of a method for distributed charging session data transfer between a charging station and a charging station operator in accordance with an embodiment of the present invention.

### DETAILED DESCRIPTION

As discussed above, charging stations are normally connected to a charging station operator via an Internet connection, and the authentication of the user is performed online via the charging station operator. In many cases, charging stations are located on lower levels of parking decks under high-rise buildings or in other environments where cellular network reception is poor or non-existent. Such charging stations may be connected to the Internet via a hardwired or wireless connection, which may experience periodic outages. When the Internet connection of a charging station is unavailable, or offline, the charging station cannot authenticate users and therefore cannot enable, or properly charge for, charging sessions.

Various technologies that pertain to systems and methods that provide a system and a method for certificate-based authentication for a charging session of an electric vehicle are presented. The disclosed certificate-based authentication for the charging session of an electric vehicle is configured to work in a setting where neither the charging station nor a user device, such as a smartphone, of a user have an active connection to the Internet.

The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

The term electric vehicle (EV), as used herein, refers to a motorized vehicle deriving locomotive power, either full-time or part-time, from an electric system on board the motorized vehicle. By way of non-limiting examples, an EV may be an electrically powered passenger vehicle for road use; an electric scooter; an electric forklift; a cargo-carrying vehicle powered, full-time or part-time, by electricity; an off-road electrically powered vehicle; an electrically powered watercraft; etc.

The term electric vehicle supply equipment (EVSE) refers to equipment by which an EV may be charged or recharged. An EVSE may comprise or be coupled to a computing system whereby service to the EV is provisioned, optionally, according to parameters. In some embodiments, values for the parameters are operator selectable. Alternatively, or in addition, the values for the parameters may be automatically selected. An EVSE may include a means of providing cost accounting, and may further include a payment acceptance component. An EVSE may be installed at a home or residence of an owner/operator of an EV, at a place of business for an owner/operator of an EV, at a fleet facility for a fleet comprising one or more EVs, at a public charging station, etc. The present disclosure interchangeably uses the terms EVSE and "charging station," where for purposes of this disclosure, charging station, charging points, and charging docks are examples of an EVS. Alternatively, an EVSE may mean a power supplying device that supplies power to EVs regardless of form (electric cars, trucks, buses, neighborhood electric vehicles or people transport vehicles that utilize AC or DC current to transfer power) and with or without additional power transferring components such as transceivers, or inverters etc.

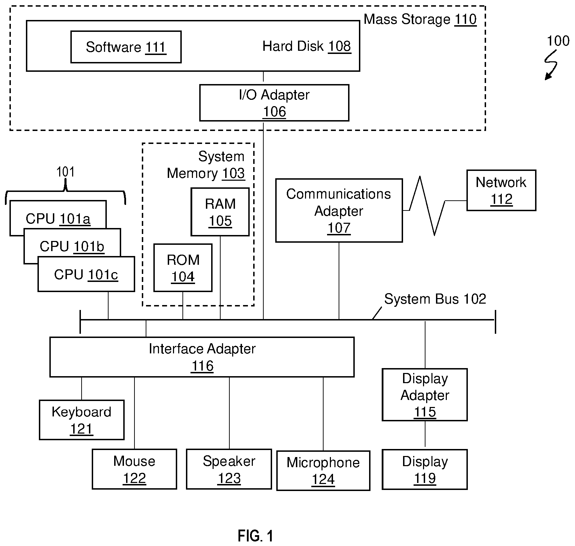

Referring now to FIG. 1, a computing system 100 is generally shown in accordance with one or more embodiments of the invention. The computing system 100 can be an electronic, computer framework comprising and/or employing any number and combination of computing devices and networks utilizing various communication technologies, as described herein. The computing system 100 can be easily scalable, extensible, and modular, with the ability to change to different services or reconfigure some features independently of others. The computing system 100 may be, for example, a server, desktop computer, laptop computer, tablet computer, or smartphone. In some examples, computing system 100 may be a cloud computing node. Computing system 100 may be described in the general context of computer system executable instructions, such as program modules, being executed by a computer system. Generally, program modules may include routines, programs, objects, components, logic, data structures, and so on that perform particular tasks or implement particular abstract data types. Computing system 100 may be practiced in distributed cloud computing environments where tasks are performed by remote processing devices that are linked through a communications network. In a distributed cloud computing environment, program modules may be located in both local and remote computer system storage media including memory storage devices.

As shown in FIG. 1 the computing system 100 has one or more central processing units (CPU(s)) 101a, 101b, 101c, etc., (collectively or generically referred to as processor(s) 101). The processors 101 can be a single-core processor, multi-core processor, computing cluster, or any number of other configurations. The processors 101, also referred to as processing circuits, are coupled via a system bus 102 to a system memory 103 and various other components. The system memory 103 can include a read-only memory (ROM) 104 and a random access memory (RAM) 105. The ROM 104 is coupled to the system bus 102 and may include a basic input/output system (BIOS) or its successors like Unified Extensible Firmware Interface (UEFI), which controls certain basic functions of the computing system 100. The RAM is read-write memory coupled to the system bus 102 for use by the processors 101. The system memory 103 provides temporary memory space for operations of said instructions during operation. The system memory 103 can include random access memory (RAM), read-only memory, flash memory, or any other suitable memory systems.

The computing system 100 comprises an input/output (I/O) adapter 106 and a communications adapter 107 coupled to the system bus 102. The I/O adapter 106 may be a small computer system interface (SCSI) adapter that communicates with a hard disk 108 and/or any other similar component. The I/O adapter 106 and the hard disk 108 are collectively referred to herein as a mass storage 110.

Software 111 for execution on the computing system 100 may be stored in the mass storage 110. The mass storage 110 is an example of a tangible storage medium readable by the processors 101, where the software 111 is stored as instructions for execution by the processors 101 to cause the computing system 100 to operate, such as is described herein below with respect to the various Figures. Examples of computer program products and the execution of such instruction are discussed herein in more detail. The communications adapter 107 interconnects the system bus 102 with a network 112, which may be an outside network, enabling the computing system 100 to communicate with other such systems. In one embodiment, a portion of the system memory 103 and the mass storage 110 collectively store an operating system, which may be any appropriate operating system to coordinate the functions of the various components shown in FIG. 1.

Additional input/output devices are shown as connected to the system bus 102 via a display adapter 115 and an interface adapter 116. In one embodiment, the adapters 106, 107, 115, and 116 may be connected to one or more I/O buses that are connected to the system bus 102 via an intermediate bus bridge (not shown). A display 119 (e.g., a screen or a display monitor) is connected to the system bus 102 by the display adapter 115, which may include a graphics controller to improve the performance of graphics intensive applications and a video controller. A keyboard 121, a mouse 122, a speaker 123, a microphone 124, etc., can be interconnected to the system bus 102 via the interface adapter 116, which may include, for example, a Super I/O chip integrating multiple device adapters into a single integrated circuit. Suitable I/O buses for connecting peripheral devices such as hard disk controllers, network adapters, and graphics adapters typically include common protocols, such as the Peripheral Component Interconnect (PCI) and the Peripheral Component Interconnect Express (PCIe). Thus, as configured in FIG. 1, the computing system 100 includes processing capability in the form of the processors 101, storage capability including the system memory 103 and the mass storage 110, input means such as the keyboard 121, the mouse 122, and the microphone 124, and output capability including the speaker 123 and the display 119.

In some embodiments, the communications adapter 107 can transmit data using any suitable interface or protocol, such as the Internet small computer system interface, among others. The network 112 may be a cellular network, a radio network, a wide area network (WAN), a local area network (LAN), or the Internet, among others. An external computing device may connect to the computing system 100 through the network 112. In some examples, an external computing device may be an external webserver or a cloud computing node.

It is to be understood that the block diagram of FIG. 1 is not intended to indicate that the computing system 100 is to include all of the components shown in FIG. 1. Rather, the computing system 100 can include any appropriate fewer or additional components not illustrated in FIG. 1 (e.g., additional memory components, embedded controllers, modules, additional network interfaces, etc.). Further, the embodiments described herein with respect to computing system 100 may be implemented with any appropriate logic, wherein the logic, as referred to herein, can include any suitable hardware (e.g., a processor, an embedded controller, or an application-specific integrated circuit, among others), software (e.g., an application, among others), firmware, or any suitable combination of hardware, software, and firmware, in various embodiments.

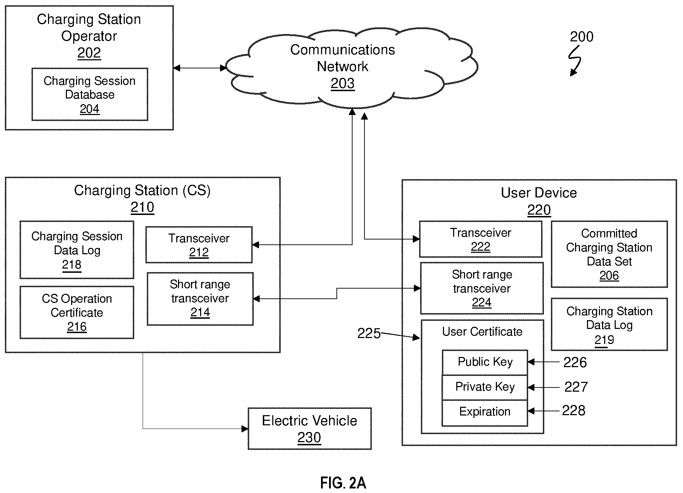

Referring now to FIG. 2A, a block diagram illustrating a system 200 for certificate-based authentication for a charging session of an electric vehicle in accordance with one or more embodiments of the invention is shown. As illustrated, the system 200 includes a charging station 210, a charging station operator 202 of the charging station 210, a user device 220, and an electric vehicle 230 corresponding to the user device 220. In exemplary embodiments, the charging station 210, the charging station operator 202, and the user device 220 include a processing system, such as the computing system 100 shown in FIG. 1.

In exemplary embodiments, the charging station 210 includes a transceiver 212 that provides a connection to a communications network 203. The communications network 203 may include a combination of private and public networks, such as the Internet. The charging station 210 is configured to communicate with the charging station operator 202 via an Internet connection over the communications network 203. Likewise, the user device 220 includes a transceiver 222 that provides a connection to the charging station operator 202 via the communications network 203. In one embodiment, the user device 220 is a smartphone or other similar device that is associated with an operator of the electric vehicle 230. In exemplary embodiments, when both the charging station 210 and the user device 220 are able to communicate with the charging station operator 202 via the communications network 203, one or more of the charging stations 210 and the charging station operator 202 are configured to authenticate the user device 220 and activate a charging session for an electric vehicle 230.

From time to time, the charging station 210 may not be able to communicate with the charging station operator 202 via the communications network 203, *i.e.,* the Internet connection of the charging station 210 is down. In such cases, the charging station 210 is configured to perform a certificate-based authentication for a charging session of the electric vehicle 230 by communicating directly with the user device 220. In exemplary embodiments, the charging station 210 includes a short-range transceiver 214 and the user device 220 includes a short-range transceiver 224. The short-range transceiver 214 and the short-range transceiver 224 are configured to facilitate communication between the charging station 210 and the user device 220 via a personal area network protocol, such as Bluetooth, Near-Field Communication (NFC), or the like.

In exemplary embodiments, the user device 220 includes a user certificate 225 that may be obtained from the charging station operator 202. In one embodiment, the user certificate includes a public key 226, a private key 227, and an expiration date/time 228 of the user certificate. The charging station 210 includes a charging station operation certificate 216 that is obtained from the charging station operator 202. In exemplary embodiments, during the authentication process, the user device 220 provides the user certificate 225 to the charging station 210, which utilizes the public key 226 along with data stored in the charging station operation certificate 216 to authenticate the user device 220 and responsively enable a charging session of the electric vehicle 230.

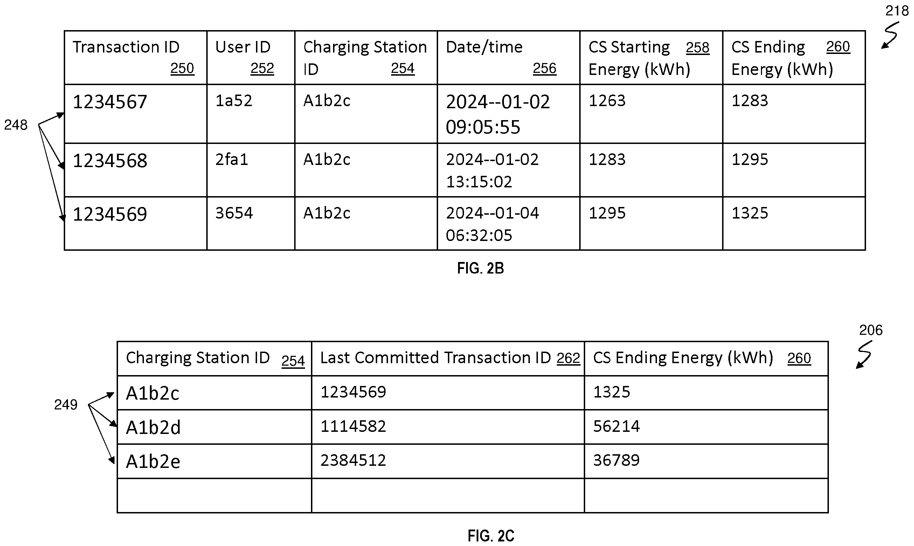

In exemplary embodiments, the charging station 210 is configured to create and store a charging session data log 218 that includes relevant data corresponding to the charging session. FIG. 2B illustrates a block diagram of the charging session data log 218 in accordance with an embodiment of the present invention. As illustrated, the charging session data log 218 includes a plurality of entries 248 that each correspond to a charging session and each entry includes a unique transaction ID 250, a user device ID 252, a charging station ID 254, a date/time stamp 256, a total energy provided by the charging station at the start of the charging session (CS Starting Energy) 258, and a total energy provided by the charging station at the end of the charging session (CS Ending Energy) 260. In exemplary embodiments, the charging station 210 is configured to add an entry 248 to the charging session data log 218 at the completion of each charging station. In addition, the charging station 210 is configured to delete an entry 248 from the charging stations to the charging session data log 218 based on a determination that the charging station operator 202 has received the data corresponding to the entry 248.

In exemplary embodiments, the charging station 210 includes a real time clock that is utilized to generate the date/time stamp 256. When the charging station 210 is online, (*i.e.,* connected to the Internet) the real time clock is periodically checked to ensure that the real time clock is correct. However, when the charging station 210 is offline, the real time clock may begin to drift and become incorrect. In exemplary embodiments, the real time clock can be corrected using communication with connected user devices, such as shown and described in U.S. Patent Application No. 18/168,914 entitled ACQUIRING TIME FOR AN ELECTRIC VEHICLE SUPPLY EQUIPMENT (EVSE) BASED ON A SHORT-RANGE WIRELESS COMMUNICATION-BASED AUTOMATED PROCESS, which was filed on February 14, 2023.

In exemplary embodiments, the charging station operator 202 includes a charging session database 204 that includes an identification of all of the charging stations 210 that are operated by the charging station operator 202. The charging session database 204 includes a charging station ID for each charging station 210 and the geographical location of each charging station 210. The charging session database 204 is configured to receive data from the charging session data log 218 that is created by the charging stations 210.

During normal operations, i.e., when the Internet connection between the charging station 210 and the charging station operator 202 is available, the charging station 210 is configured to periodically transmit the data from the charging session data log 218 to the charging station operator 202 and to purge the transmitted data from the charging session data log 218 once an acknowledgement is received from the charging station operator 202 that the data from the charging session data log 218 has been received and stored in the charging session database 204.

In exemplary embodiments, the charging station operator 202 is configured to create and transmit a committed charging station data set 206 to a user device 220. The committed charging station data set 206 indicates for a set of charging stations 210 the most recently received charging session data that has been received by the charging station operator 202. FIG. 2C illustrates a block diagram of a committed charging station data set 206 in accordance with an embodiment of the present invention. As illustrated, the charging station data set 206 includes a plurality of entries 249 that each correspond to a charging station 210, each entry 249 includes a charging station ID 254, a last committed transaction ID 262, and a total energy provided by the charging station at the end of the charging session (CS Ending Energy) 260. In exemplary embodiments, the charging station operator 202 is configured to periodically create the committed charging station data set 206 that is transmitted to a user device 220 based on the location of the user device 220 and based on the data in the charging session database 204. In exemplary embodiments, the charging station operator 202 is configured to include charging stations 210 located within a predetermined distance of the user device 220 in the committed charging station data set 206.

In exemplary embodiments, when a charging station 210 is offline (i.e., not in communication with the charging station operator 202 via the communications network 203), the charging station 210 is configured to perform unrestricted charging (i.e., the charging station 210 is configured to enable a charging session without authentication of the user device 220). In these cases, the charging station 210 will still record charging session data in a charging session data log 218. Although the user device 220 may not be authenticated, the charging station 210 is still configured to transmit the charging session data log 218 to the user device 220 and to obtain a committed charging station data set 206 from the user device 220. Further, the charging station 210 is configured to update the charging session data log 218 based on the committed charging station data set 206 received from the user device 220.

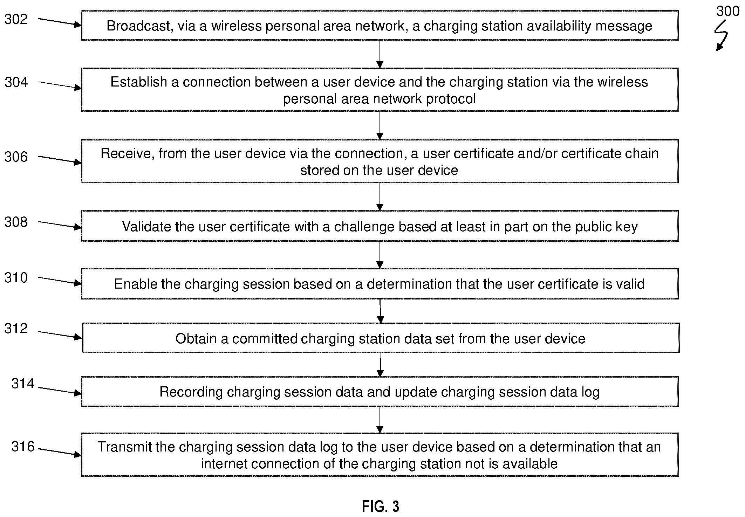

Referring now to FIG. 3, a flowchart illustrating a method 300 for performing certificate-based authentication for a charging session of the electric vehicle in accordance with one or more embodiments of the invention is shown. In exemplary embodiments, the method 300 is performed by a processing system of a charging station, such as the charging station 210 shown in FIG. 2. The method 300 includes broadcasting, via a wireless personal area network protocol, a charging station availability message. In exemplary embodiments, the personal area network protocol is Bluetooth. In one embodiment, the charging station availability message includes one or more of the available powers from the charging station, a maximum charging rate available from the charging station, a cost per kilowatt-hour for power provided by the charging station, and an available charging time of the charging station until a next reservation.

Next, as shown at block 304, the method 300 includes establishing a connection between a user device 220 and the charging station 210 via the wireless personal area network protocol. In exemplary embodiments, the user device 220 is a mobile phone or other processing system that is associated with an operator of an electric vehicle. The method 300 also includes receiving, by the charging station from the user device 220 via the connection, a user certificate and/or certificate chain stored on the user device 220, as shown at block 306. In exemplary embodiments, the user device 220 includes a user certificate that is associated with the user and the user certificate includes a public key, a private key, and an expiration date/time of the user certificate. In one embodiment, the user certificate is obtained by the user device 220 from a charging station operator.

Next, as shown at block 308, the method 300 includes validating, by the charging station, the user certificate with a challenge based at least in part on the public key. In exemplary embodiments, the validation of the public key of the user certificate is performed offline, i.e., the authentication of the user certificate is performed locally by the charging station and does not require or utilize a connection to the Internet to perform the validation. In one embodiment, validating the user certificate includes generating a nonce value, creating an encrypted nonce by encrypting the nonce value using the public key, transmitting the encrypted nonce to the user device 220, receiving a decrypted nonce value from the user device 220, and determining that the user certificate is valid based on a determination that the decrypted nonce value equals the nonce value. Validating the user certificate may also include verifying that the user certificate has not expired based on the expiration date/time of the user certificate.

The method 300 also includes enabling the charging session based on a determination by the charging station that the user certificate is valid, as shown at block 310. After the charging session has been enabled, the charging station is configured to charge an electric vehicle that is connected to the charging station. As shown at block 312, the method 300 includes obtaining a committed charging station data set 206 from the user device 220. Next, as shown at block 316, the method 300 includes recording charging session data and updating the charging session data log 218. In exemplary embodiments, updating the charging session data log 218 includes creating a new entry corresponding to the completed charging session. In exemplary embodiments, updating the charging session data log 218 includes deleting entries of the charging session data log 218 that have been successfully received and stored by the charging station operator based on the committed charging station data set 206. In exemplary embodiments, the charging session data log 218 includes a charging station identifier, an identifier of the user device 220, the total power provided during the charging session, and the total power provided by the charging station during the lifetime of the charging station. After the charging session has ended, the method 300 includes transmitting the charging session data log 218 to the user device 220 based on a determination that an internet connection of the charging station is not available, as shown at block 316. In exemplary embodiments, the user device 220 is configured to transmit the charging session data log 218 to the charging station operator 202 of the charging station 210 once the user device 220 is connected to the Internet. In exemplary embodiments, based on a determination that an internet connection of the charging station 210 is available, the charging station 210 is configured to transmit the charging session data log 218 to a charging station operator 202. In exemplary embodiments, charging session data log 218 is transmitted, by the charging station to the user device 220, based on a determination that the internet connection is not available. The charging session data log 218 includes data for one or more previous charging sessions that occurred while the internet connection of the charging station 210 was not available.

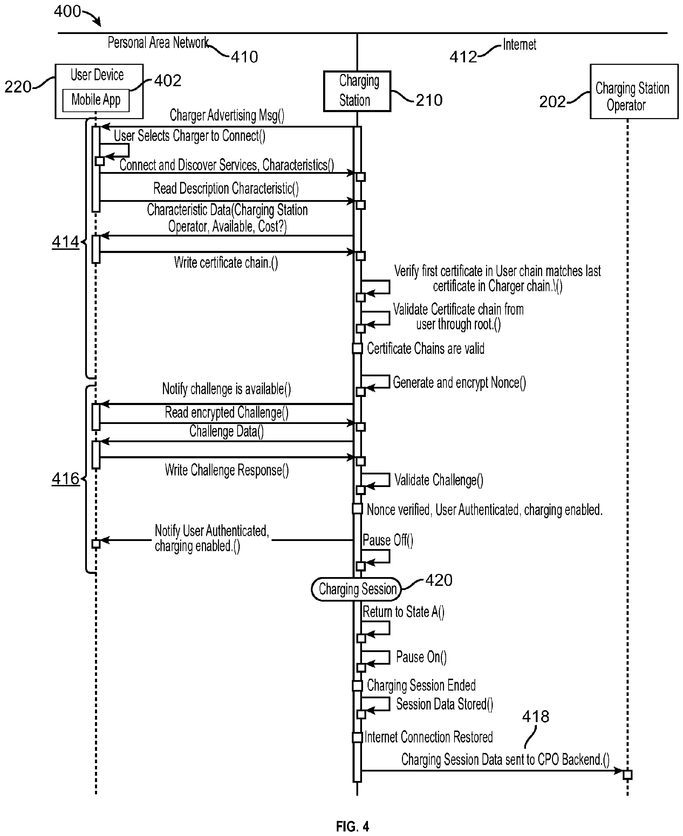

Referring now to FIG. 4, a diagram illustrating a certificate-based authentication process 400 between a charging station 210, a user device 220, and a charging station operator 202 in accordance with one or more embodiments of the invention is shown. As illustrated, the certificate-based authentication process 400 includes communication between a user device 220 and a charging station 210, via a personal area network 410. In one embodiment, the personal area network 410 is a point-to-point connection between a mobile application 402 of the user device 220 and the charging station 210 using a personal area network protocol, such as Bluetooth. In addition, the certificate-based authentication process 400 includes communication between the charging station 210 and a charging station operator 202 via an Internet connection 412.

As illustrated, the authentication process 400 includes exchanging a series of messages 414 between the mobile application 402 of the user device 220 and the charging station 210 to establish a communications channel between the user device 220 and the charging station 210. The authentication process 400 also includes exchanging a series of messages 416 between a mobile application 402 on the user device 220 and the charging station 210 to validate a user certificate of the user device 220. In addition, the authentication process 400 includes transmitting one or more messages 418 from the charging station 210 to the charging station operator 202 via an Internet connection 412 to provide the charging station operator 202 with data from a charging session 420.

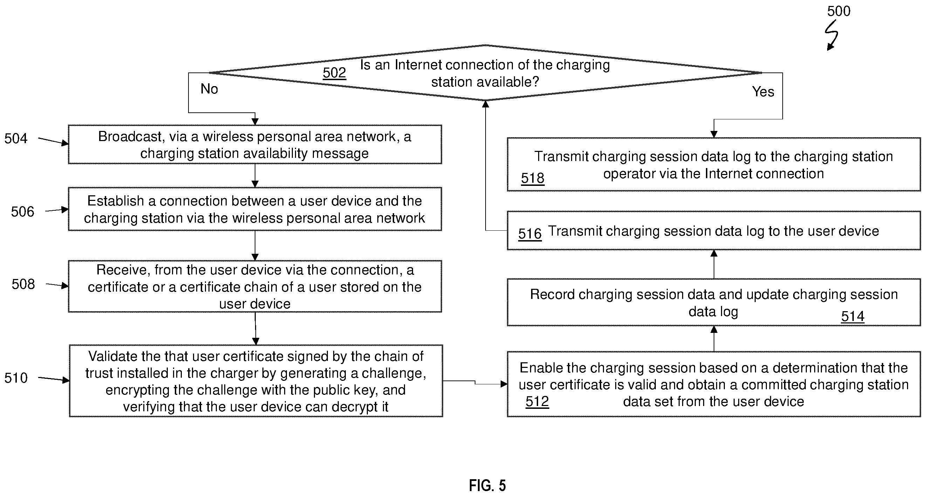

Referring now to FIG. 5, a flowchart illustrating a method 500 for performing certificate-based authentication for a charging session of an electric vehicle in accordance with one or more embodiments of the invention is shown. In exemplary embodiments, the method 500 is performed by a processing system of a charging station, such as the charging station 210 shown in FIG. 2. As shown at decision block 502, the method 500 includes determining whether an Internet connection to the charging station is available. Based on a determination that the Internet connection of the charging station is not available, the method 500 includes broadcasting, via a wireless personal area network protocol, a charging station availability message. In exemplary embodiments, the personal area network is a Bluetooth network. In one embodiment, the charging station availability message includes one or more of the available powers from the charging station, a maximum charging rate available from the charging station, a cost per kilowatt-hour for power provided by the charging station, and an available charging time of the charging station until a next reservation.

Next, as shown at block 506, the method 500 includes establishing a connection between a user device and the charging station via the wireless personal area network protocol. In exemplary embodiments, the user device is a mobile phone or other processing system that is associated with an operator of an electric vehicle. The method 500 also includes receiving, by the charging station from the user device via the connection, a user certificate and/or certificate chain stored on the user device, as shown at block 508. In exemplary embodiments, the user device includes a user certificate that is associated with the user and the user certificate includes a public key, a private key, and an expiration date/time of the user certificate. In one embodiment, the user certificate is obtained by the user device from a charging station operator.

Next, as shown at block 510, the method 500 includes validating, by the charging station, the that user certificate was signed by the chain of trust installed in the charging station by generating a challenge (i.e., a nonce value), encrypting the nonce value with the users public key, and verifying that the user can decrypt it In exemplary embodiments, the validation of the public key of the user certificate is performed offline, i.e., the authentication of the user certificate is performed locally by the charging station and does not require or utilize a connection to the Internet to perform the validation. In one embodiment, validating the user certificate includes generating a nonce value, creating an encrypted nonce by encrypting the nonce value using the public key, transmitting the encrypted nonce to the user device, receiving a decrypted nonce value from the user device, and determining that the user certificate is valid based on a determination that the decrypted nonce value equals the nonce value. Validating the user certificate may also include verifying that the user certificate has not expired based on the expiration date/time of the user certificate.

The method 500 also includes enabling the charging session based on a determination by the charging station that the user certificate is valid and obtaining a committed charging station data set from the user device, as shown at block 512. After the charging session has been enabled, the charging station is configured to charge an electric vehicle that is connected to the charging station. As shown at block 514, the method 500 includes recording charging session data and updating the charging session data log 218. In exemplary embodiments, updating the charging session data log 218 includes creating a new entry corresponding to the completed charging session. In exemplary embodiments, updating the charging session data log 218 includes deleting entries of the charging session data log 218 that have been successfully received and stored by the charging station operator based on the committed charging station data set. In exemplary embodiments, the charging session data includes a charging station identifier, an identifier of the user device, the total power provided during the charging session, and the total power provided by the charging station during the lifetime of the charging station. After the charging session has ended, the method 500 includes transmitting the charging session data log 218 to the user device 220, as shown at block 516. In exemplary embodiments, the user device 220 stores the received charging session data log 218 in a charging station data log 219. In exemplary embodiments, based on a determination that the Internet connection of the charging station is available, the method 500 also includes transmitting the charging session data log 218 to the charging station operator 202 via the Internet connection.

In exemplary embodiments, transmitting the charging session data via both the user device and directly from the charging station to the charging station operator provides a redundant source of the charging session data to the charging station operator to ensure that all of the charging session data is received by the charging station operator. In exemplary embodiments, when the Internet connection of the charging station is available the methods used by the charging station to authenticate a user device may be the same, *i.e.,* method steps 504 through 514, or an alternative method that utilizes an active Internet connection of the charging station may be used.

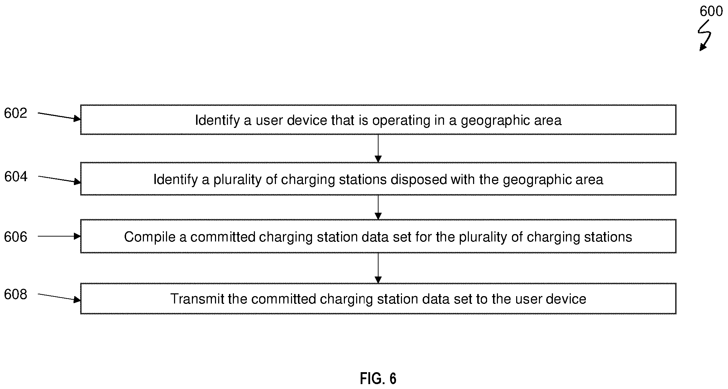

Referring now to FIG. 6, a flow chart diagram of a method 600 for providing a committed charging station data set to a user device in accordance with an embodiment of the present invention is shown. In exemplary embodiments, the method 600 is performed by a processing system of a charging station operator, such as the charging station operator 202 shown in FIG. 2. As shown at block 602, the method 600 includes identifying a user device that is operating in a geographic area. In exemplary embodiments, the charging station operator may periodically obtain the location of the user devices that are in communication with the charging station operator. Next, as shown at block 604, the method 600 includes identifying a plurality of charging stations disposed with the geographic area. The method 600 also includes compiling a committed charging station data set for the plurality of charging stations, as shown at block 606. Next, as shown at block 608, the method 600 includes transmitting the committed charging station data set to the user device.

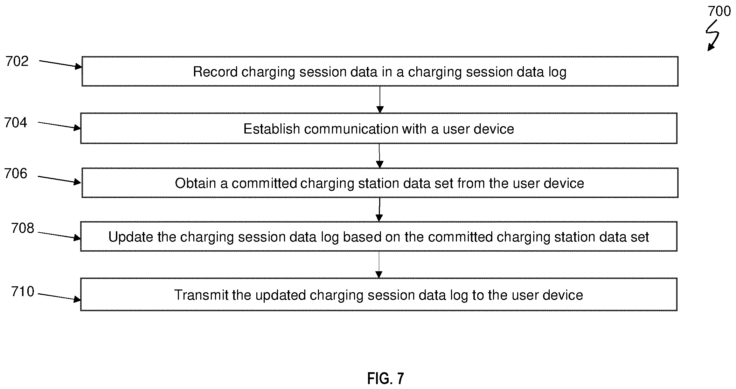

Referring now to FIG. 7, a flow chart diagram of a method 700 for distributed charging session data transfer between a charging station and a charging station operator in accordance with an embodiment of the present invention is shown. In exemplary embodiments, the method 700 is performed by a processing system of a charging station, such as the charging station 210 shown in FIG. 2. As shown at block 702, the method 700 includes recording, by a charging station 210, charging session data in a charging session data log 218. In exemplary embodiments, the charging session data log 218 includes a plurality of entries that each correspond to a charging session performed by the charging station. Each entry includes a unique transaction ID, a user device ID, a charging station ID, a total energy provided by the charging station at the start of the charging session, and a total energy provided by the charging station at the end of the charging session.

Next, as shown at block 704, the method 700 includes establishing communication with a user device 220. In exemplary embodiments, the user device is a smartphone, and the communication is established via a personal area network. At block 706, the method 700 includes obtaining a committed charging station data set 206 from the user device 220. In exemplary embodiments, the committed charging station data set 206 includes an indication of the most recently received charging session data for the charging station 210 that has been received by a charging station operator 202 corresponding to the charging station 210. In exemplary embodiments, the user device 220 receives the committed charging station data set 206 from a charging station operator 202 based at least in part on a location of the user device 220, as explained in more detail above with reference to FIG. 6.

The method 700 also includes updating the charging session data log 218 based on the committed charging station data set 206. In exemplary embodiments, updating the charging session data log 218 includes deleting entries of the charging session data log 218 that have been received by a charging station operator 202 corresponding to the charging station 210. After the charging session data log 218 has been updated, the method 700 includes transmitting the updated charging session data log 218 to the user device 220, which stores the data from the charging session data log 218 in a charging station data log 219. In exemplary embodiments, the charging station data log 219 may include charging session data logs 218 from multiple charging stations 210. In exemplary embodiments, the user device 220 is configured to transmit the charging station data log 219 to the charging station operator 202, which utilizes the charging station data log 219 to update a charging session database 204 maintained by the charging station operator 202.

The techniques described herein can be particularly useful for electric vehicle charging stations. While particular embodiments are described in terms of an electric vehicle charging stations, the techniques described herein are not limited to such EV charging stations but can also be used with other types of EV charging stations.

While embodiments of the present invention have been disclosed in exemplary forms, it will be apparent to those skilled in the art that many modifications, additions, and deletions can be made therein without departing from the spirit and scope of the invention and its equivalents, as set forth in the following claims.

Embodiments and the various features and advantageous details thereof are explained more fully with reference to the non-limiting embodiments that are illustrated in the accompanying drawings and detailed in the following description. Descriptions of well-known starting materials, processing techniques, components and equipment are omitted so as not to unnecessarily obscure embodiments in detail. It should be understood, however, that the detailed description and the specific examples, while indicating preferred embodiments, are given by way of illustration only and not by way of limitation. Various substitutions, modifications, additions and/or rearrangements within the spirit and/or scope of the underlying inventive concept will become apparent to those skilled in the art from this disclosure.

As used herein, the terms "comprises," "comprising," "includes," "including," "has," "having" or any other variation thereof, are intended to cover a non-exclusive inclusion. For example, a process, article, or apparatus that comprises a list of elements is not necessarily limited to only those elements but may include other elements not expressly listed or inherent to such process, article, or apparatus.

Additionally, any examples or illustrations given herein are not to be regarded in any way as restrictions on, limits to, or express definitions of, any term or terms with which they are utilized. Instead, these examples or illustrations are to be regarded as being described with respect to one particular embodiment and as illustrative only. Those of ordinary skill in the art will appreciate that any term or terms with which these examples or illustrations are utilized will encompass other embodiments which may or may not be given therewith or elsewhere in the specification and all such embodiments are intended to be included within the scope of that term or terms.

In the foregoing specification, the invention has been described with reference to specific embodiments. However, one of ordinary skill in the art appreciates that various modifications and changes can be made without departing from the scope of the invention. Accordingly, the specification and figures are to be regarded in an illustrative rather than a restrictive sense, and all such modifications are intended to be included within the scope of invention.

Although the invention has been described with respect to specific embodiments thereof, these embodiments are merely illustrative, and not restrictive of the invention. The description herein of illustrated embodiments of the invention is not intended to be exhaustive or to limit the invention to the precise forms disclosed herein (and in particular, the inclusion of any particular embodiment, feature or function is not intended to limit the scope of the invention to such embodiment, feature, or function). Rather, the description is intended to describe illustrative embodiments, features, and functions in order to provide a person of ordinary skill in the art context to understand the invention without limiting the invention to any particularly described embodiment, feature, or function. While specific embodiments of, and examples for, the invention are described herein for illustrative purposes only, various equivalent modifications are possible within the spirit and scope of the invention, as those skilled in the relevant art will recognize and appreciate. As indicated, these modifications may be made to the invention in light of the foregoing description of illustrated embodiments of the invention and are to be included within the spirit and scope of the invention. Thus, while the invention has been described herein with reference to particular embodiments thereof, a latitude of modification, various changes and substitutions are intended in the foregoing disclosures, and it will be appreciated that in some instances some features of embodiments of the invention will be employed without a corresponding use of other features without departing from the scope and spirit of the invention as set forth. Therefore, many modifications may be made to adapt a particular situation or material to the essential scope and spirit of the invention.

Respective appearances of the phrases "in one embodiment," "in an embodiment," or "in a specific embodiment" or similar terminology in various places throughout this specification are not necessarily referring to the same embodiment. Furthermore, the particular features, structures, or characteristics of any particular embodiment may be combined in any suitable manner with one or more other embodiments. It is to be understood that other variations and modifications of the embodiments described and illustrated herein are possible in light of the teachings herein and are to be considered as part of the spirit and scope of the invention.

In the description herein, numerous specific details are provided, such as examples of components and/or methods, to provide a thorough understanding of embodiments of the invention. One skilled in the relevant art will recognize, however, that an embodiment may be able to be practiced without one or more of the specific details, or with other apparatus, systems, assemblies, methods, components, materials, parts, and/or the like. In other instances, well-known structures, components, systems, materials, or operations are not specifically shown or described in detail to avoid obscuring aspects of embodiments of the invention. While the invention may be illustrated by using a particular embodiment, this is not and does not limit the invention to any particular embodiment and a person of ordinary skill in the art will recognize that additional embodiments are readily understandable and are a part of this invention.

It will also be appreciated that one or more of the elements depicted in the drawings/figures can also be implemented in a more separated or integrated manner, or even removed or rendered as inoperable in certain cases, as is useful in accordance with a particular application.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component.

The present invention may be a system, a method, and/or a computer program product at any possible technical detail level of integration. The computer program product may include a computer readable storage medium (or media) having computer readable program instructions thereon for causing a processor to carry out aspects of the present invention.

Various embodiments are described herein with reference to flowchart illustrations and/or block diagrams of methods, apparatus (systems), and computer program products. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

### Further embodiments

1. A method for distributed charging session data transfer between a charging station and a charging station operator, the method comprising:
   recording, by the charging station, charging session data in a charging session data log;
   obtaining, by the charging station from a user device, a committed charging station data set;
   updating the charging session data log based on the committed charging station data set; and
   transmitting the updated charging session data log to the user device.
2. The method of embodiment 1, wherein the charging session data includes a charging station identifier, a total power provided by the charging station during a lifetime of the charging station before a start of the charging session, and a total power provided by charging station during the lifetime of the charging station at an end of the charging session.
3. The method of embodiment 2, wherein charging session data log incudes a plurality of entries that each correspond to a charging session, each of the plurality of entries include a unique transaction identifier and the charging session data for the charging session.
4. The method of embodiment 3, wherein the committed charging station data set includes a most recently received unique transaction identifier for the charging station.
5. The method of embodiment 4, wherein updating the charging session data log includes deleting entries of the plurality of entries that correspond to entries that occurred prior to the most recently received unique transaction identifier for the charging station.
6. The method of embodiment 1, further comprising updating by the charging station operator a charging session database based on the updated charging session data log.
7. A method for performing certificate-based authentication for a charging session of an electric vehicle, the method comprising:
   broadcasting, by a charging station via a wireless personal area network protocol, a charging station availability message;
   establishing a connection between a user device and the charging station via the wireless personal area network protocol;
   receiving, by the charging station from the user device via the connection, a user certificate stored on the user device;
   validating, by the charging station based at least in part on a public key of the user certificate, the user certificate;
   based on a determination by the charging station that the user certificate is valid, enabling the charging session;
   recording, by the charging station, charging session data; and
   based on a determination that an internet connection of the charging station is not available, transmitting the charging session data to the user device.
8. The method of embodiment 7, wherein validating the user certificate comprises:
   generating a nonce value;
   creating an encrypted nonce by encrypting the nonce value using the public key;
   transmitting the encrypted nonce to the user device;
   receiving from the user device, a decrypted nonce value;
   determining that the user certificate is valid based on a determination that the decrypted nonce value equals the nonce value; and
   determining that the user certificate is not valid based on a determination that the decrypted nonce value does not equal the nonce value.
9. The method of embodiment 7, wherein validating the user certificate includes verifying that the user certificate has not expired.
10. The method of embodiment 7, wherein the charging station availability message includes one or more of an available power from charging station, a maximum charging rate available from the charging station, a cost per kilowatt-hour for power provided by the charging station, and an available charging time of the charging station until a next reservation.
11. The method of embodiment 7, wherein the charging session data includes a charging station identifier, an identifier of the user device, a total power provided by the charging station during a lifetime of the charging station before a start of the charging session, and a total power provided by charging station during the lifetime of the charging station at an end of the charging session.
12. The method of embodiment 7, further comprising based on a determination that an internet connection of the charging station is available, transmitting a charging session data log to a charging station operator.
13. The method of embodiment 7, further comprising transmitting, by the charging station to the user device, a charging session data log including charging session data associated with one or more previous charging sessions.
14. The method of embodiment 13, wherein the one or more previous charging sessions are charging sessions that have not been recorded by a charging station operator.
15. The method of embodiment 7, wherein the user certificate on the user device is obtained from a charging station operator.
16. A method for performing certificate-based authentication for a charging session of an electric vehicle, the method comprising:
   monitoring an internet connection of a charging station;
   based on a determination that the internet connection of the charging station is not available:
      broadcasting, by the charging station via a wireless personal area network protocol, a charging station availability message;
      establishing a connection between a user device and the charging station via the wireless personal area network protocol;
      receiving, by the charging station from the user device via the connection, a user certificate stored on the user device;
      validating, by the charging station based at least in part on a public key of the user certificate, the user certificate;
      based on a determination by the charging station that the user certificate is valid, enabling the charging session;
      recording, by the charging station, charging session data; and
      transmitting a copy of the charging session data to the user device; and
   based on a determination that the internet connection of the charging station has been reestablished, transmitting the charging session data to a charging station operator.
17. The method of embodiment 16, wherein validating the user certificate comprises:
   generating a nonce value;
   creating an encrypted nonce by encrypting the nonce value using the public key;
   transmitting the encrypted nonce to the user device;
   receiving from the user device, a decrypted nonce value;
   determining that the user certificate is valid based on a determination that the decrypted nonce value equals the nonce value; and
   determining that the user certificate is not valid based on a determination that the decrypted nonce value does not equal the nonce value.
18. The method of embodiment 16, wherein the charging station availability message includes one or more of an available power from charging station, a maximum charging rate available from the charging station, a cost per kilowatt-hour for power provided by the charging station, and an available charging time of the charging station until a next reservation.
19. The method of embodiment 16, wherein the charging session data includes a charging station identifier, an identifier of the user device, a total power provided by the charging station during a lifetime of the charging station before a start of the charging session, and a total power provided by charging station during the lifetime of the charging station at an end of the charging session.
20. The method of embodiment 16, further comprising transmitting, by the charging station to the user device, a charging session data log including charging session data associated with one or more previous charging sessions, wherein the one or more previous charging sessions are charging sessions that have not been recorded by a charging station operator.

## Claims

1. A method for distributed charging session data transfer between a charging station and a charging station operator, the method comprising:
recording, by the charging station, charging session data in a charging session data log;
obtaining, by the charging station from a user device, a committed charging station data set;
updating the charging session data log based on the committed charging station data set; and
transmitting the updated charging session data log to the user device.

2. The method of claim 1, wherein the charging session data includes a charging station identifier, a total power provided by the charging station during a lifetime of the charging station before a start of the charging session, and a total power provided by the charging station during the lifetime of the charging station at an end of the charging session.

3. The method of claim 2, wherein the charging session data log incudes a plurality of entries that each correspond to a charging session, each of the plurality of entries include a unique transaction identifier and the charging session data for the charging session.

4. The method of claim 3, wherein the committed charging station data set includes a most recently received unique transaction identifier for the charging station.

5. The method of claim 4, wherein updating the charging session data log includes deleting entries of the plurality of entries that correspond to entries that occurred prior to the most recently received unique transaction identifier for the charging station.

6. The method of claim 1, further comprising updating by the charging station operator a charging session database based on the updated charging session data log.

7. A method for performing certificate-based authentication for a charging session of an electric vehicle, the method comprising:
broadcasting, by a charging station via a wireless personal area network protocol, a charging station availability message;
establishing a connection between a user device and the charging station via the wireless personal area network protocol;
receiving, by the charging station from the user device via the connection, a user certificate stored on the user device;
validating, by the charging station based at least in part on a public key of the user certificate, the user certificate;
based on a determination by the charging station that the user certificate is valid, enabling the charging session;
recording, by the charging station, charging session data; and
based on a determination that an internet connection of the charging station is not available, transmitting the charging session data to the user device.

8. The method of claim 7, wherein validating the user certificate comprises:
generating a nonce value;
creating an encrypted nonce by encrypting the nonce value using the public key;
transmitting the encrypted nonce to the user device;
receiving from the user device, a decrypted nonce value;
determining that the user certificate is valid based on a determination that the decrypted nonce value equals the nonce value; and
determining that the user certificate is not valid based on a determination that the decrypted nonce value does not equal the nonce value.

9. The method of claim 7 or 8,
wherein validating the user certificate includes verifying that the user certificate has not expired; and/or
wherein the charging station availability message includes one or more of an available power from charging station, a maximum charging rate available from the charging station, a cost per kilowatt-hour for power provided by the charging station, and an available charging time of the charging station until a next reservation; and/or
wherein the charging session data includes a charging station identifier, an identifier of the user device, a total power provided by the charging station during a lifetime of the charging station before a start of the charging session, and a total power provided by charging station during the lifetime of the charging station at an end of the charging session.

10. The method according to any of the claims 7 to 9, further comprising based on a determination that an internet connection of the charging station is available, transmitting a charging session data log to a charging station operator.

11. The method according to any of the claims 7 to 10, further comprising transmitting, by the charging station to the user device, a charging session data log including charging session data associated with one or more previous charging sessions, wherein the one or more previous charging sessions are in particular charging sessions that have not been recorded by a charging station operator.

12. The method according to any of the claims 7 to 11, wherein the user certificate on the user device is obtained from a charging station operator.

13. A method for performing certificate-based authentication for a charging session of an electric vehicle, the method comprising:
monitoring an internet connection of a charging station;
based on a determination that the internet connection of the charging station is not available:
broadcasting, by the charging station via a wireless personal area network protocol, a charging station availability message;
establishing a connection between a user device and the charging station via the wireless personal area network protocol;
receiving, by the charging station from the user device via the connection, a user certificate stored on the user device;
validating, by the charging station based at least in part on a public key of the user certificate, the user certificate;
based on a determination by the charging station that the user certificate is valid, enabling the charging session;
recording, by the charging station, charging session data; and
transmitting a copy of the charging session data to the user device; and
based on a determination that the internet connection of the charging station has been reestablished, transmitting the charging session data to a charging station operator.

14. The method of claim 13, wherein validating the user certificate comprises:
generating a nonce value;
creating an encrypted nonce by encrypting the nonce value using the public key;
transmitting the encrypted nonce to the user device;
receiving from the user device, a decrypted nonce value;
determining that the user certificate is valid based on a determination that the decrypted nonce value equals the nonce value; and
determining that the user certificate is not valid based on a determination that the decrypted nonce value does not equal the nonce value.

15. The method of claim 13 or 14,
wherein the charging station availability message includes one or more of an available power from charging station, a maximum charging rate available from the charging station, a cost per kilowatt-hour for power provided by the charging station, and an available charging time of the charging station until a next reservation; and/or
wherein the charging session data includes a charging station identifier, an identifier of the user device, a total power provided by the charging station during a lifetime of the charging station before a start of the charging session, and a total power provided by charging station during the lifetime of the charging station at an end of the charging session; and/or further comprising transmitting, by the charging station to the user device, a charging session data log including charging session data associated with one or more previous charging sessions, wherein the one or more previous charging sessions are charging sessions that have not been recorded by a charging station operator.
